# EUROPEAN PATENT APPLICATION

(11) **EP 3 187 246 A1**
(43) Date of publication of application: **05.07.2017**
(21) Application number: 16846165.5
(22) Date of filing: 09.08.2016
(51) Int. Cl.: B01D 53/78, B01D 53/18

(54) **EXHAUST GAS PROCESSING DEVICE AND MAINTENANCE METHOD FOR EXHAUST GAS PROCESSING DEVICE**

(30) Priority: 14.09.2015 JP 2015181250
(71) Applicant: Fuji Electric Co., Ltd., Kawasaki-shi, Kanagawa 210-9530 (JP)
(72) Inventor: TAKAHASHI Kuniyuki, Kawasaki-shi Kanagawa 210-9530 (JP); ENOMOTO, Joe, Kawasaki-shi Kanagawa 210-9530 (JP)
(74) Representative: MERH-IP Matias Erny Reichl Hoffmann Patentanwälte PartG mbB
(86) International application number: PCT/JP2016/073463
(87) International publication number: WO 2017/047292

(57) **Abstract**

A nozzle provided inside an absorption tower requires periodic maintenance because it degrades because of deformation caused by corrosion due to a liquid injected, wear of an injection port due to injection of a liquid at high-pressure, or the like. Normally, the nozzle and the absorption tower that includes therein a trunk tube that supplies a liquid to the nozzle, and the like are configured integrally. Therefore, if maintenance of the nozzle is to be performed, the entire absorption tower needs to be detached and dismantled temporarily from an exhaust gas processing apparatus. For this reason, the work is large-scale, and it has been difficult to make ready operators, the work time, the working space and the like. An exhaust gas processing apparatus is provided, the exhaust gas processing apparatus including: an absorption cylinder that absorbs a target substance in an exhaust gas by causing the exhaust gas to contact a liquid; an injection portion that injects the liquid into an inner space of the absorption cylinder through which the exhaust gas passes; a conduit: to which the injection portion is attached; that guides the liquid to the injection portion; and that is arranged inside the absorption cylinder; and a supply tube that supplies the liquid to the conduit, wherein the conduit has an uncoupling portion that allows uncoupling from the supply tube so that the conduit can be withdrawn to an outside along a flue that guides, to outside air, the exhaust gas that has passed through the absorption cylinder in a state where the injection portion remains attached.

## Description

### BACKGROUND

### 1. TECHNICAL FIELD

The present invention relates to an exhaust gas processing apparatus and an exhaust gas processing apparatus maintenance method.

### 2. RELATED ART

Conventionally, sulfur oxide (Sox) or the like in an exhaust gas is eliminated by causing gas-liquid contact to occur between the exhaust gas introduced into an absorption tower and a liquid injected from a nozzle provided inside the absorption tower.

### [Prior Art Documents]

### [Patent Documents]

[Patent Document 1] Japanese Patent Application Publication No. H06-190240
[Patent Document 2] Japanese Patent Application Publication No. H08-281055

A nozzle provided inside an absorption tower degrades because of deformation caused by corrosion due to a liquid injected, wear of an injection port due to injection of a liquid at high-pressure, or the like. For this reason, periodic maintenance of the nozzle is necessary. Normally, the nozzle and the absorption tower that includes therein a trunk tube that supplies a liquid to the nozzle, and the like are configured integrally. Therefore, if maintenance of the nozzle is to be performed, the entire absorption tower needs to be detached and dismantled temporarily from an exhaust gas processing apparatus. For this reason, the work has been large-scale, and it has been difficult to make ready operators, the work time, the working space and the like.

### SUMMARY

### [General Disclosure of the Invention]

An exhaust gas processing apparatus may include an absorption cylinder. The absorption cylinder may absorb a target substance in an exhaust gas by causing the exhaust gas to contact a liquid. The exhaust gas processing apparatus may include an injection portion that injects the liquid into an inner space of the absorption cylinder through which the exhaust gas passes. Also, the exhaust gas processing apparatus may include a conduit to which the injection portion is attached and that guides the liquid to the injection portion. The conduit may be arranged inside the absorption cylinder. Furthermore, the exhaust gas processing apparatus may include a supply tube that supplies the liquid to the conduit. The conduit may have an uncoupling portion that allows uncoupling from the supply tube so that the conduit can be withdrawn to an outside along a flue in a state where the injection portion remains attached. The flue may guide, to outside air, the exhaust gas that has passed through the absorption cylinder.

In the exhaust gas processing apparatus, a plurality of units formed by combinations of the injection portion and the conduit may be arranged inside the absorption cylinder. Sizes of the plurality of units may decrease as distances between them and the flue decrease. A number of units among the plurality of units to which the liquid is supplied from the supply tube may vary depending on an emission amount of the exhaust gas. Also, duration during which the liquid is being supplied to the plurality of units may increase as distances between them and the flue decrease. Each unit among the plurality of units may be separably coupled with each other. The supply tube and the uncoupling portion may be provided to each unit among the plurality of units.

The absorption cylinder may have a maintenance window near the uncoupling portion.

Furthermore, the exhaust gas processing apparatus may include a linking portion provided to an inner wall of the absorption cylinder. Also, the exhaust gas processing apparatus may include a beam that connects the linking portion and the conduit. Connection of the beam with the linking portion may be disconnected, and the beam may be withdrawn to the outside integrally with the conduit.

A hook-lock portion may be provided to the beam. The hook-lock portion may receive an external force for withdrawing the conduit outside.

The conduit may have a branch tube to which the injection portion is attached, and a trunk tube to which a plurality of the branch tubes are connected. A plurality of the beams may be provided radially from the trunk tube. A length of the beam in a radial direction from the trunk tube may be longer than a length of the branch tube.

The exhaust gas processing apparatus may include a guide portion for moving the conduit along the flue. The guide portion may have a pair of guide members arranged to sandwich the beam in an inner circumference direction of the absorption cylinder.

The exhaust gas processing apparatus may include an exhaust cylinder that forms the flue. The exhaust cylinder and the absorption cylinder may form coaxial cylindrical shapes.

An exhaust gas processing apparatus maintenance method for an exhaust gas processing apparatus having:
an absorption cylinder that absorbs a target substance in an exhaust gas by causing the exhaust gas to contact a liquid;
an injection portion that injects the liquid into an inner space of the absorption cylinder through which the exhaust gas passes;
a conduit: to which the injection portion is attached; that guides the liquid to the injection portion; and that is arranged inside the absorption cylinder; and
a supply tube that supplies the liquid to the conduit,
may include:
   uncoupling the conduit from the supply tube. In this case, the exhaust gas processing apparatus maintenance method may include withdrawing the conduit to an outside along a flue that guides, to outside air, the exhaust gas that has passed through the absorption cylinder in a state where the injection portion remains attached.

Furthermore, the exhaust gas processing apparatus maintenance method may include disconnecting a beam extending out from the conduit and a linking portion provided to an inner wall of the absorption cylinder.

The exhaust gas processing apparatus maintenance method may include mounting a protection member at a tip of the beam.

The exhaust gas processing apparatus maintenance method may include uncoupling coupling between a plurality of units formed by combinations of the injection portion and the conduit that are arranged inside the absorption cylinder.

The exhaust gas processing apparatus maintenance method may include inserting a guide member so as to allow movement of the conduit along the flue.

The summary clause does not necessarily describe all necessary features of the embodiments of the present invention. The present invention may also be a sub-combination of the features described above.

### BRIEF DESCRIPTION OF THE FIGURES

Fig. 1 is a schematic view showing an exhaust gas processing apparatus according to a first embodiment.
Fig. 2 is a conceptual view for explaining the gist of maintenance of the exhaust gas processing apparatus according to the first embodiment.
Fig. 3 is a schematic view showing a front view of the exhaust gas processing apparatus according to the first embodiment.
Fig. 4 is a schematic view showing one example of an arrangement of beams.
Fig. 5 is a schematic view showing a cross-sectional view of a section A-A in Fig. 3.
Fig. 6 shows the gist for explaining a liquid ejection tube withdrawing method.
Fig. 7 is a flow diagram showing a procedure of performing maintenance of the exhaust gas processing apparatus according to the first embodiment.
Fig. 8 is a schematic view for explaining another embodiment of maintenance of an exhaust gas processing apparatus.
Fig. 9 is a schematic view for explaining an arrangement of guide units.

### BEST MODE FOR CARRYING OUT THE PRESENT INVENTION

Hereinafter, (some) embodiment(s) of the present invention will be described. The embodiment(s) do(es) not limit the invention according to the claims, and all the combinations of the features described in the embodiment(s) are not necessarily essential to means provided by aspects of the invention.

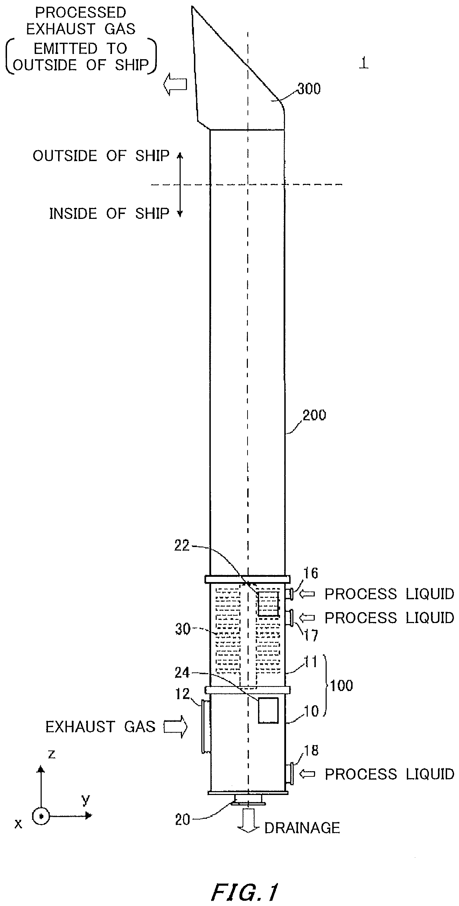

Fig. 1 is a schematic view showing an exhaust gas processing apparatus 1 according to a first embodiment. The exhaust gas processing apparatus 1 is an apparatus that removes an environmentally harmful substance such as sulfur oxide (Sox) contained in an exhaust gas emitted from an engine room to emit the resulting gas as an environmentally less harmful exhaust gas to the outside of a ship.

The exhaust gas processing apparatus 1 includes an absorption tower 100 and an exhaust gas exit cylinder 200. In the present example, the axes of coordinates are defined as shown in Fig. 1. That is, the longitudinal direction of the absorption tower 100 is defined as the z-axis direction. Also, the direction from the inside of a ship toward the outside of the ship is defined as the positive z-axis direction. The direction that is orthogonal to the z-axis and heads toward a reader of the sheet of paper is defined as the positive x-axis direction. The direction that is orthogonal to the x-axis and the z-axis is y-axis, and the positive y-axis direction is defined according to the right-handed system. In the following explanation, the positive z-axis is the upward direction. In some of the following figures, the axes of coordinates are displayed so as to make it possible to know the orientation of respective figures with reference to the axes of coordinates of Fig. 1.

The absorption tower 100 has an inlet cylinder 10 and an absorption cylinder 11. The inlet cylinder 10, the absorption cylinder 11 and the exhaust gas exit cylinder 200 all have cylindrical shapes, and have the mutually approximately identical inner diameters. The absorption cylinder 11 is arranged at an upper end of the inlet cylinder 10 so as to be coaxial with the inlet cylinder 10, and they are welded to each other so as to be watertight and airtight. The exhaust gas exit cylinder 200 is arranged at an upper end of the absorption cylinder 11 so as to be coaxial with the absorption cylinder 11, and they are welded to each other so as to be watertight and airtight.

The inlet cylinder 10 has an exhaust gas inlet portion 12, a third liquid inlet portion 18 and a drainage outlet portion 20. Also, the inlet cylinder 10 has, on its side near a part at which it is joined with the absorption cylinder 11, a maintenance window 24. The exhaust gas inlet portion 12 is provided on a side of the inlet cylinder 10, and allows an exhaust gas emitted from an engine room or the like to be introduced into the inlet cylinder 10.

The exhaust gas inlet portion 12 is provided along a tangential direction of the outer diameter of the inlet cylinder 10 so that an exhaust gas is introduced along an inner wall of the absorption tower 100. Specifically, an outer side wall of the exhaust gas inlet portion 12 is provided to extend in a tangential direction relative to an external shape of the inlet cylinder 10. Thereby, an exhaust gas can rotate in a predetermined rotation direction inside the absorption tower 100.

The third liquid inlet portion 18 is provided on a side of the inlet cylinder 10 near a bottom portion thereof, and allows a process liquid for cleaning an exhaust gas to be introduced into the inlet cylinder 10 as described below. The drainage outlet portion 20 is provided at a bottom portion of the inlet cylinder 10, and allows a process liquid after an exhaust gas cleaning process to be emitted to the outside of the inlet cylinder 10 as described below.

The absorption cylinder 11 has a first liquid inlet portion 16 and a second liquid inlet portion 17. Also, the absorption cylinder 11 has, on its side, a maintenance window 22. The first liquid inlet portion 16 is provided on a side of the absorption cylinder 11 near a part at which it is joined with the exhaust gas exit cylinder 200. The second liquid inlet portion 17 is provided on a side of the absorption cylinder 11 and below the first liquid inlet portion 16. The first liquid inlet portion 16 and the second liquid inlet portion 17 allow process liquids for cleaning an exhaust gas to be introduced into the absorption cylinder 11 as described below.

The first liquid inlet portion 16, the second liquid inlet portion 17 and the third liquid inlet portion 18 supply process liquids from the outside of the absorption tower 100 to a liquid ejection tube 30. In the present embodiment, process liquids are seawater taken in from an environment surrounding a ship. The process liquids are not limited to seawater. The process liquids may be lake water, river water, an alkaline liquid prepared in advance as a cleaning liquid for an exhaust gas, or the like.

The absorption cylinder 11 has a cylindrical inner space, and has the liquid ejection tube 30 in the inner space. The liquid ejection tube 30 diffusion-injects a supplied process liquid as a mist or droplets from injection portions described below. A configuration of the liquid ejection tube 30 is described below using figures.

The exhaust gas exit cylinder 200 functions as an exhaust cylinder that forms a flue. The exhaust gas exit cylinder 200 guides an exhaust gas that has passed through the absorption cylinder 11 to outside air. An elbow portion 300 is attached to an upper end of the exhaust gas exit cylinder 200. The elbow portion 300 prevents entrance of rain water into the exhaust gas exit cylinder 200. In the present embodiment, the elbow portion 300 can be detached from the exhaust gas exit cylinder 200.

An exhaust gas emitted from a power unit such as an engine is introduced into the inlet cylinder 10 from the exhaust gas inlet portion 12 provided on a side of the inlet cylinder 10. The exhaust gas introduced into the inlet cylinder 10 heads toward the absorption cylinder 11 rising, while rotating in a predetermined rotation direction, along an inner wall of the inlet cylinder 10.

The exhaust gas introduced into the absorption cylinder 11 rises through a spiral flow path along an inner wall of the absorption cylinder 11. In the course of passage inside the absorption cylinder 11, an environmentally harmful substance is removed from the exhaust gas when gas-liquid contact occurs between the exhaust gas and a process liquid injected from the liquid ejection tube 30. The exhaust gas that has undergone a purification process by passing inside the absorption cylinder 11 thereafter goes through the exhaust gas exit cylinder 200 and the elbow portion 300 to be emitted to the outside of the ship.

A bottom portion of the inlet cylinder 10 functions as a drainage storing portion that stores therein temporarily a process liquid that has been injected from the liquid ejection tube 30 and fallen inside the absorption cylinder 11. The drainage outlet portion 20 emits the stored drainage to the outside of the absorption tower 100.

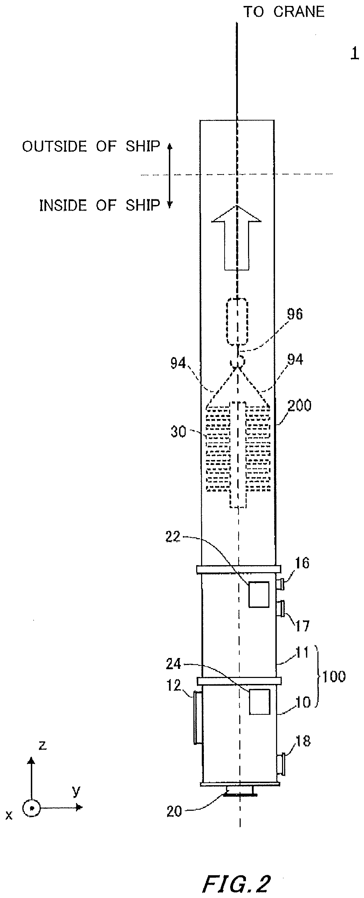

Fig. 2 is a conceptual view for explaining the gist of maintenance of the exhaust gas processing apparatus 1 according to the first embodiment. Fig. 2 particularly shows work of withdrawing the liquid ejection tube 30 to the outside. The liquid ejection tube 30, particularly the injection portions that inject a process liquid, experiences degradation of the injection performance because of deformation of an injection port caused by corrosion due to the process liquid, by injection of the process liquid at high-pressure, or by other causes and the like. The injection profile of the liquid ejection tube 30, such as the diffusion angle, particle size, or injection amount per unit time of the process liquid injected, for example, is predetermined. Here, "degradation of the injection performance" refers to the actual process liquid injection property deviating from the injection profile to an increasing degree. For this reason, maintenance of the liquid ejection tube 30 needs to be performed periodically. Here, maintenance refers to work of withdrawing the liquid ejection tube 30 to the outside of the ship, and replacing a nozzle for maintaining the injection performance of the liquid ejection tube 30, or the like.

Among types of work in the maintenance of the exhaust gas processing apparatus 1 according to the present embodiment, the gist of work of withdrawing the liquid ejection tube 30 to the outside is particularly explained with reference to Fig. 2. Normally, a large-scale crane is installed at a harbor where maintenance of ships is performed. In the present embodiment, the liquid ejection tube 30 is pulled up and withdrawn from the exhaust gas processing apparatus 1 using the crane.

First, a maintenance operator stops introduction of an exhaust gas into the exhaust gas processing apparatus 1. Next, the maintenance operator detaches the elbow portion 300 attached to an upper end of the exhaust gas exit cylinder 200. Next, the maintenance operator enters the inside of the absorption cylinder 11 through the maintenance window 22, and attaches pulling wires 94 to the liquid ejection tube 30. Next, the maintenance operator inserts a crane hook 96 through the exhaust gas exit cylinder 200, and hooks the pulling wires 94 with the crane hook 96. Next, the maintenance operator uncouples the liquid ejection tube 30 from the absorption cylinder 11. The maintenance operator raises the crane hook 96 in the direction of an outlined arrow in Fig. 2 to withdraw the liquid ejection tube 30 to the outside of the ship along the exhaust gas exit cylinder 200.

In the exhaust gas processing apparatus 1, because the liquid ejection tube 30 relatively easily degrades as compared with other components, it particularly requires periodic maintenance. In the present embodiment, maintenance is performed by withdrawing only the liquid ejection tube 30 from the exhaust gas processing apparatus 1. At this time, the liquid ejection tube 30 is withdrawn to the outside of the ship through the inside of the exhaust gas exit cylinder 200. For this reason, unlike the case where the entire exhaust gas processing apparatus 1 is withdrawn, a space of route to withdraw the exhaust gas processing apparatus 1 needs not to be made ready additionally. Also, because components that need not to be replaced can be used continuously, cost reduction becomes possible. Furthermore, because the work is to withdraw only the liquid ejection tube 30 which is part of the exhaust gas processing apparatus 1 and is relatively small-scale, it can be performed by a small number of operators. Also, because the entire liquid ejection tube 30 is withdrawn, the labor and work time for the work can be reduced as compared with work of replacing a nozzle in a state where the liquid ejection tube 30 or the like remains installed.

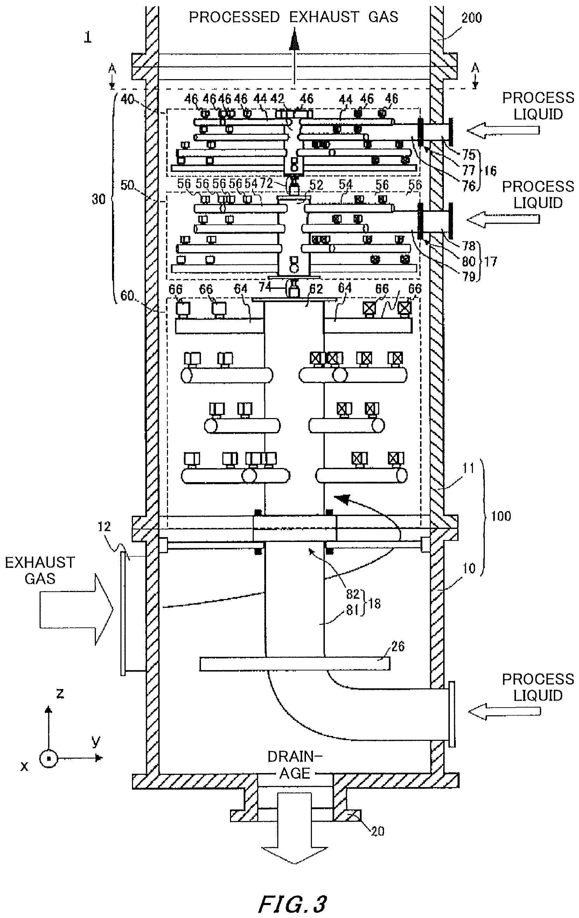

Fig. 3 is a schematic view showing a front view of the exhaust gas processing apparatus 1 according to the first embodiment. Particularly, Fig. 3 shows the portion of the absorption tower 100 in the exhaust gas processing apparatus 1. In order to facilitate understanding, Fig. 3 shows a cross-section showing the inside of the inlet cylinder 10 and the absorption cylinder 11. However, views of structures inside the inlet cylinder 10 and the absorption cylinder 11 are not cross-sectional. Also, the same members as those in Fig. 1 and Fig. 2 are given the same reference symbols, and the same explanation is not repeated.

The inlet cylinder 10 has a baffle 26 in addition to the exhaust gas inlet portion 12, the third liquid inlet portion 18 and the drainage outlet portion 20 explained using Fig. 1 and Fig. 2. The baffle 26 is installed at the third liquid inlet portion 18 so as to be approximately orthogonal to the central axis of the inlet cylinder 10. The baffle 26 is provided lower than the exhaust gas inlet portion 12. The baffle 26 has a function of partitioning the inside of the inlet cylinder 10 into a region through which an exhaust gas is introduced and a region that stores a drainage which is a used process liquid.

The liquid ejection tube 30 has a first unit 40, a second unit 50 and a third unit 60. The first unit 40 and the second unit 50 are separably coupled with each other by a first coupling portion 72. The second unit 50 and the third unit 60 are separably coupled with each other by a second coupling portion 74. From the exhaust gas exit cylinder 200 side, the first unit 40, the second unit 50 and the third unit 60 are arranged in this order. In the present embodiment, the first unit 40 is smaller than the second unit 50. Also, the second unit 50 is smaller than the third unit 60.

The first unit 40, the second unit 50 and the third unit 60 include a plurality of beams so as to, relative to the absorption tower 100, support the weights of the respective units and maintain the postures thereof. In the present figure, depiction of the beams is omitted.
Details of the arrangement of the beams and the like are described below using a figure.

The first unit 40 includes a first trunk tube 42, a plurality of first branch tubes 44, and a plurality of first injection portions 46. The first trunk tube 42 has a hollow cylindrical shape arranged to be approximately coaxial with the absorption cylinder 11. The first trunk tube 42 forms, in a direction along the central axis of the absorption cylinder 11, a flow path through which a process liquid flows.

The first branch tubes 44 have hollow cylindrical shapes. The first branch tubes 44 are provided on a side of the first trunk tube 42 so as to extend in radial directions relative to the central axis of the first trunk tube 42. Also, the plurality of first branch tubes 44 are provided at equal intervals in the circumferential direction of the first trunk tube 42. The plurality of first branch tubes 44 branch out from the first trunk tube 42 and form, on a planar plane approximately orthogonal to the first trunk tube 42, a flow path through which a process liquid flows.

A plurality of the first injection portions 46 are provided to each first branch tube 44. The plurality of first injection portions 46 are provided at equal intervals in the longitudinal direction of the first branch tubes 44. The first injection portions 46 have injection ports on surfaces marked with Xs in Fig. 3, and inject a process liquid from the injection ports. The first injection portions 46 are spray-nozzles that diffusion-inject a process liquid conically. In the present embodiment, two first injection portions 46 are provided at equal intervals corresponding to each first branch tube 44.

Furthermore, a plurality of layers, each configured with the plurality of first branch tubes 44 that extend in radial directions relative to the central axis of the first trunk tube 42 and the plurality of first injection portions 46 provided to each first branch tube among the plurality of first branch tubes 44, are provided at regular intervals in the z-direction of the first trunk tube 42. The first unit 40 has four such layers.

A material of the first trunk tube 42, the first branch tubes 44 and the first injection portions 46 is stainless steel (SUS). Stainless steel is relatively highly corrosion-resistant against seawater which is a process liquid. For this reason, the frequency of maintenance can be reduced by using stainless steel. However, corrosion of stainless steel cannot be avoided completely. Particularly, the injection ports of the first injection portions 46 that inject a process liquid at high-pressure likely experience deformation due to corrosion and wear. For this reason, even if a material that is relatively highly corrosion-resistant is used, periodic maintenance of at least the first injection portions 46 is necessary. Also, the first trunk tube 42, the first branch tubes 44 and the first injection portions 46 are respectively connected by welding.

The first trunk tube 42 allows a process liquid supplied from the first liquid inlet portion 16 to flow into the plurality of first branch tubes 44. The first branch tubes 44 allow the process liquid that has flown in from the first trunk tube 42 to flow into the plurality of first injection portions 46. The respective first injection portions 46 diffusion-inject the process liquid that has flown in from the first branch tubes 44 toward the inner space of the absorption cylinder 11 through which an exhaust gas passes. The first injection portions 46 are connected to the first branch tubes 44 so as to inject the process liquid in the horizontal direction toward downstream of a rotational flow of the exhaust gas so as to conform to the flow of the rotational flow. Thereby, a jet of the process liquid formed by the first injection portions 46 does not hinder the rotational flow of the exhaust gas in the absorption cylinder 11.

The second unit 50 includes a second trunk tube 52, a plurality of second branch tubes 54 and a plurality of second injection portions 56. The second trunk tube 52 has a hollow cylindrical shape arranged to be approximately coaxial with the absorption cylinder 11. The second trunk tube 52 forms, in a direction along the central axis of the absorption cylinder 11, a flow path through which a process liquid flows.

The second branch tubes 54 have hollow cylindrical shapes. The second branch tubes 54 are provided on a side of the second trunk tube 52 so as to extend in radial directions relative to the central axis of the second trunk tube 52. Also, the plurality of second branch tubes 54 are provided at equal intervals in the circumferential direction of the second trunk tube 52. The plurality of second branch tubes 54 branch out from the second trunk tube 52 and form, on a planar plane direction approximately orthogonal to the second trunk tube 52, a flow path through which a process liquid flows.

A plurality of the second injection portions 56 are provided to each second branch tube 54. The plurality of second injection portions 56 are provided at equal intervals in the longitudinal direction of the second branch tubes 54. The second injection portions 56 have injection ports on surfaces marked with Xs in Fig. 3, and inject a process liquid from the injection ports. The second injection portions 56 are spray-nozzles that diffusion-inject a process liquid conically. In the present embodiment, two second injection portions 56 are provided at equal intervals corresponding to each second branch tube 54.

Furthermore, a plurality of layers, each configured with the plurality of second branch tubes 54 that extend in radial directions relative to the central axis of the second trunk tube 52 and the plurality of second injection portions 56 provided to each second branch tube among the plurality of second branch tubes 54, are provided at regular intervals in the z-direction of the second trunk tube 52. The second unit 50 has four such layers.

A material of the second trunk tube 52, the second branch tubes 54 and the second injection portions 56 is stainless steel (SUS). Also, the second trunk tube 52, the second branch tubes 54 and the second injection portions 56 are respectively connected by welding.

The second trunk tube 52 allows a process liquid supplied from the second liquid inlet portion 17 to flow into the plurality of second branch tubes 54. The second branch tubes 54 allow the process liquid that has flown in from the second trunk tube 52 to flow into the plurality of second injection portions 56. The respective second injection portions 56 diffusion-inject the process liquid that has flown in from the second branch tubes 54 toward the inner space of the absorption cylinder 11 through which an exhaust gas passes. The second injection portions 56 are connected to the second branch tubes 54 so as to inject the process liquid toward downstream of a rotational flow of the exhaust gas so as to conform to the flow of the rotational flow such that the center line of the injection aligns with the horizontal direction. Thereby, a jet of the process liquid formed by the second injection portions 56 does not hinder the rotational flow of the exhaust gas in the absorption cylinder 11.

The third unit 60 includes a third trunk tube 62, a plurality of third branch tubes 64 and a plurality of third injection portions 66. The third trunk tube 62 has a hollow cylindrical shape arranged to be approximately coaxial with the absorption cylinder 11. The third trunk tube 62 forms, in a direction along the central axis of the absorption cylinder 11, a flow path through which a process liquid flows.

The third branch tubes 64 have hollow cylindrical shapes. The third branch tubes 64 are provided on a side of the third trunk tube 62 so as to extend in radial directions relative to the central axis of the third trunk tube 62. Also, the plurality of third branch tubes 64 are provided at equal intervals in the circumferential direction of the third trunk tube 62. The plurality of third branch tubes 64 branch out from the third trunk tube 62 and form, on a planar plane direction approximately orthogonal to the third trunk tube 62, a flow path through which a process liquid flows.

A plurality of the third injection portions 66 are provided to each third branch tube 64. The plurality of third injection portions 66 are provided at equal intervals in the longitudinal direction of the third branch tubes 64. The third injection portions 66 have injection ports on surfaces marked with Xs in Fig. 3, and inject a process liquid from the injection ports. The third injection portions 66 are spray-nozzles that diffusion-inject a process liquid conically. In the present embodiment, two third injection portions 66 are provided at equal intervals corresponding to each third branch tube 64.

Furthermore, a plurality of layers, each configured with the plurality of third branch tubes 64 that extend in radial directions relative to the central axis of the third trunk tube 62 and the plurality of third injection portions 66 provided to each third branch tube among the plurality of third branch tubes 64, are provided at regular intervals in the z-direction of the third trunk tube 62. The third unit 60 has four such layers.

A material of the third trunk tube 62, the third branch tubes 64 and the third injection portions 66 is stainless steel (SUS). Also, the third trunk tube 62, the third branch tubes 64 and the third injection portions 66 are respectively connected by welding.

The third trunk tube 62 allows a process liquid supplied from the third liquid inlet portion 18 to flow into the plurality of third branch tubes 64. The third branch tubes 64 allow the process liquid that has flown in from the third trunk tube 62 to flow into the plurality of third injection portions 66. The respective third injection portions 66 diffusion-inject the process liquid that has flown in from the third branch tubes 64 toward the inner space of the absorption cylinder 11 through which an exhaust gas passes. The third injection portions 66 are connected to the third branch tubes 64 so as to inject the process liquid in the horizontal direction toward downstream of a rotational flow of the exhaust gas so as to conform to the flow of the rotational flow. Thereby, a jet of the process liquid formed by the third injection portions 66 does not hinder the rotational flow of the exhaust gas in the absorption cylinder 11.

A material of the trunk tube, branch tubes and injection portions configuring the liquid ejection tube 30 is not limited to stainless steel. Any material can be applied considering the corrosion-resistance against a process liquid used and the wear resistance against high-pressure injection of the process liquid. Also, a method of connecting a branch tube and an injection portion is not limited to welding. For example, they may be connected by a screw-in means.

The first liquid inlet portion 16 has a first inlet tube 75, a first coupling tube 76 and a first joint portion 77.
The portions of the first inlet tube 75 and the first coupling tube 76 at which they face each other are provided with the first joint portion 77 which is a coupler of flanges. The flanges are fastened to each other using a bolt and a nut. Also, a sealing process to prevent penetration of seawater is applied at the joint part between the flanges. A silicon-based sealing material may be applied for the sealing process. Thereby, penetration of seawater into the joint part can be prevented, and corrosion of the joint part due to seawater can be suppressed. The first inlet tube 75 is introduced by penetrating a side of the absorption cylinder 11, and allows a process liquid to flow in from the outside of the absorption tower 100 toward the first coupling tube 76. The first coupling tube 76 is watertight-welded to a side of the first trunk tube 42, and allows the process liquid that has flown in from the first inlet tube 75 to flow into the first trunk tube 42.

The second liquid inlet portion 17 has a second inlet tube 78, a second coupling tube 79 and a second joint portion 80. The portions of the second inlet tube 78 and the second coupling tube 79 at which they face each other are provided with the second joint portion 80 which is a coupler of flanges similar to the first joint portion 77. The second inlet tube 78 is introduced by penetrating a side of the absorption cylinder 11, and allows a process liquid to flow in from the outside of the absorption tower 100 toward the second coupling tube 79. The second coupling tube 79 is watertight-welded to a side of the second trunk tube 52, and allows the process liquid that has flown in from the second inlet tube 78 to flow into the second trunk tube 52.

The third liquid inlet portion 18 has a third inlet tube 81 and a third joint portion 82. The portions of the third inlet tube 81 and the third trunk tube 62 at which they face each other are provided with the third joint portion 82 which is a coupler of flanges similar to the first joint portion 77. The third inlet tube 81 is introduced by penetrating a side of the inlet cylinder 10 near its lower portion, and extends to the vicinity of a part at which the inlet cylinder 10 and the absorption cylinder 11 are joined. The third inlet tube 81 has a bent portion inside the inlet cylinder 10 so as to be joined to be approximately coaxial with the central axis of the third trunk tube 62. The third inlet tube 81 allows a process liquid to flow in from the outside of the absorption tower 100 to the third trunk tube 62.

In the present embodiment, the first inlet tube 75, the second inlet tube 78 and the third inlet tube 81 respectively function as supply tubes. In the first unit 40, the first coupling tube 76, the first trunk tube 42 and the plurality of first branch tubes 44 function as conduits to which a process liquid is supplied from the first inlet tube 75. In the second unit 50, the second coupling tube 79, the second trunk tube 52 and the plurality of second branch tubes 54 function as conduits to which a process liquid is supplied from the second inlet tube 78. In the third unit 60, the third trunk tube 62 and the plurality of third branch tubes 64 function as conduits to which a process liquid is supplied from the third inlet tube 81.

When withdrawing the liquid ejection tube 30 to the outside of a ship, an operator can enter the inside of the absorption cylinder 11 through the maintenance window 22 explained using Fig. 1, and disconnect the joints at the first joint portion 77 and the second joint portion 80. Similarly, the operator can enter the inside of the absorption cylinder 11 through the maintenance window 24 explained using Fig. 1, and disconnect the joint at the third joint portion 82. In the present embodiment, the first joint portion 77, second joint portion 80 and third joint portion 82 which are boundary portions of the respective conduits respectively play the roles of uncoupling portions. In the present embodiment, the maintenance window 22 and the maintenance window 24 are provided near the uncoupling portions.

Methods employed at the joints at the first joint portion 77, the second joint portion 80 and the third joint portion 82 are not limited to fastening using a bolt and a nut. The joints at the first joint portion 77, the second joint portion 80 and the third joint portion 82 may employ various joining methods that can achieve watertightness. For example, flanges may be joined together by welding. In the case of joining by welding, an operator disconnects the joints at respective joints by cutting the welded portions by a grinder or the like.

The emission amount of an exhaust gas per unit time varies depending on the rate of operation of an engine of a ship.
For this reason, units to be used may be limited depending on the rate of operation of the engine of the ship. For example, if the rate of operation of the engine is lower than 30%, only the first unit 40 is used. Also, for example, if the rate of operation of the engine is equal to or higher than 30% and lower than 80%, the second unit 50 is used in addition to the first unit 40. If the rate of operation of the engine is equal to or higher than 80, all of the first unit 40, the second unit 50 and the third unit 60 are used. In this manner, by limiting units to be used depending on the rate of operation of the engine, an exhaust gas cleaning process can be performed efficiently.

It is known that in the case of an engine of a ship, the general rate of operation is approximately 30% on average. For this reason, as described above, the first unit 40 used always tends to be used for a longer time than the second unit 50 and the third unit 60. Also, the second unit 50 tends to be used for a longer time than the third unit 60. Degradation caused by corrosion due to a process liquid or degradation caused by wear proceeds as the time of use increases. For this reason, the degree of degradation of the first unit 40 tends to be higher than the degrees of degradation of the second unit 50 and the third unit 60 in a certain period. Also, the degree of degradation of the second unit 50 tends to be higher than the degree of degradation of the third unit 60.

In the present embodiment, because the first unit 40, the second unit 50 and the third unit 60 are separably connected with each other, a unit on which replacement maintenance is to be performed can be selected depending on the degrees of degradation. For example, if only the first unit 40 requires maintenance, an operator can disconnect coupling of the first coupling portion 72 to withdraw only the first unit 40. Similarly, if only the first unit 40 and the second unit 50 require maintenance, an operator can disconnect the second coupling portion 74 to withdraw the first unit 40 and the second unit 50. In this manner, in the exhaust gas processing apparatus 1 according to the present embodiment, an operator can determine, for each unit, whether or not maintenance is required, and perform maintenance such as replacement.

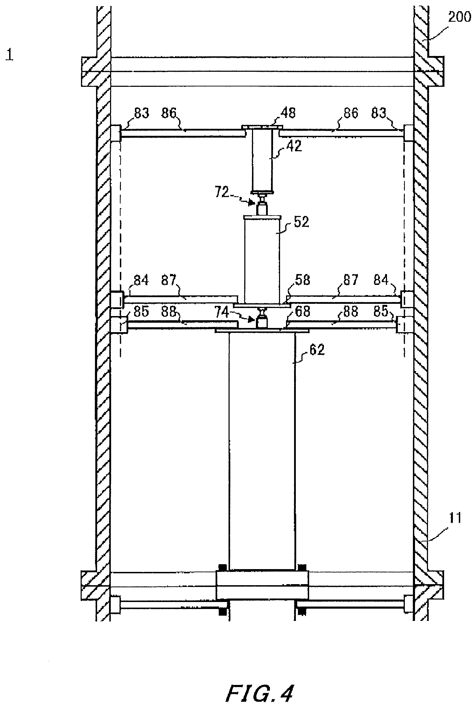

Fig. 4 is a schematic view showing one example of an arrangement of beams. Particularly, Fig. 4 shows only elements that are necessary for explaining positions of beams in the schematic view of the exhaust gas processing apparatus 1 shown in Fig. 3. The beams are members to lock the liquid ejection tube 30 to an inner wall of the absorption tower 100 to support the weight of the liquid ejection tube 30. Common elements are given the same reference numbers, and the same explanation is not repeated.

The absorption cylinder 11 has, on its inner wall, a plurality of first linking portions 83, a plurality of second linking portions 84 and a plurality of third linking portions 85. Respective ones among the plurality of first linking portions 83 are provided with first beams 86 that extend toward the central axis of the absorption cylinder 11. A first linking portion 83 and a first beam 86 are connected by connection using a bolt and a nut or by welding. Respective ones among the plurality of second linking portions 84 are provided with second beams 87 that extend toward the central axis of the absorption cylinder 11. A second linking portion 84 and a second beam 87 are connected by connection using a bolt and a nut or by welding. Respective ones among the plurality of third linking portions 85 are provided with third beams 88 that extend toward the central axis of the absorption cylinder 11. A third linking portion 85 and a third beam 88 are connected by connection using a bolt and a nut or by welding.

The first trunk tube 42 includes, at its upper end, a first beam fixing portion 48. A first beam 86 that extends from a first linking portion 83 is connected to the first beam fixing portion 48. The plurality of first beams 86 are arranged on a plane that is approximately orthogonal to the central axis of the absorption cylinder 11. Also, the plurality of first beams 86 are arranged so as to form a cross as seen from above.

The second trunk tube 52 includes, at its lower end, a second beam fixing portion 58. A second beam 87 that extends from a second linking portion 84 is connected to the second beam fixing portion 58. The plurality of second beams 87 are arranged on a plane that is approximately orthogonal to the central axis of the absorption cylinder 11. Also, the plurality of second beams 87 are arranged so as to form a cross as seen from above.

The third trunk tube 62 includes, at its upper end, a third beam fixing portion 68. A third beam 88 that extends from a third linking portion 85 is connected to the third beam fixing portion 68. The plurality of third beams 88 are arranged on a plane that is approximately orthogonal to the central axis of the absorption cylinder 11. Also, the plurality of third beams 88 are arranged so as to form a cross as seen from above.

In the present embodiment, when withdrawing the liquid ejection tube 30 to the outside of a ship, an operator enters the inside of the absorption cylinder 11 through the maintenance window 22 explained using Fig. 1, and disconnects the connection between the first linking portions 83 and the first beams 86, and the connection between the second linking portion 84 and the second beams 87. Similarly, the operator enters the inside of the absorption cylinder 11 through the maintenance window 24 explained using Fig. 1, and disconnects the connection between the third linking portion 85 and the third beams 88. The first beams 86, the second beams 87 and the third beams 88 are withdrawn to the outside of a ship together with the liquid ejection tube 30 while they remain connected with the first trunk tube 42, the second trunk tube 52 and the third trunk tube 62, respectively.

In the present embodiment, the first beams 86, the second beams 87 and the third beams 88 are arranged to extend from identical positions in the circumferential direction of an inner wall of the absorption cylinder 11 toward the central axis of the absorption cylinder 11. In other words, if seen from above, the crosses formed by the plurality of first beams 86, the plurality of second beams 87 and the plurality of third beams 88, respectively, are arranged so as to be seen as overlapping with each other.

In the present embodiment, the first linking portions 83 are shorter than the second linking portions 84. That is, the circumferential ends of the plurality of first beams 86 are configured to extend outward past the circumferential ends of the plurality of second beams 87. Also, the second linking portions 84 are shorter than the third linking portions 85. That is, the circumferential ends of the plurality of second beams 87 are configured to extend outward past the circumferential ends of the plurality of third beams 88. With a configuration like this, the end portions of the third beams 88 can be prevented from contacting the first linking portions 83 or the second linking portions 84 when the liquid ejection tube 30 is withdrawn to the outside of a ship. Similarly, the end portions of the second beams 87 can be prevented from contacting the first linking portions 83.

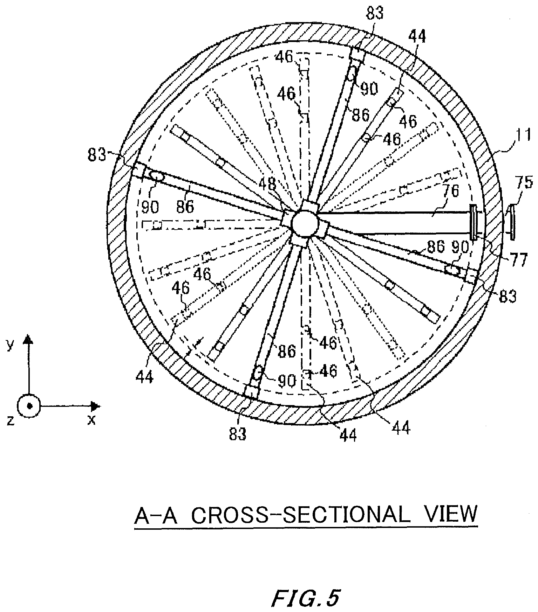

Fig. 5 is a schematic view showing a cross-sectional view of a section A-A in Fig. 3. Also, only a configuration of the first unit 40 is shown in Fig. 5 in order to simplify explanation. Common elements are given the same reference numbers, and the same explanation is not repeated.

As explained using Fig. 3, the first unit 40 has four layers, each layer configured by the plurality of first branch tubes 44 and the plurality of first injection portions 46. In Fig. 5, respective layers, each configured by the plurality of first branch tubes 44 and the plurality of first injection portions 46, are indicated with solid lines, dashed lines, broken line and dot-and-dash lines.

In each layer, the first branch tubes 44 are disposed so as to form a cross as seen from above. A plurality of first branch tubes 44 and a plurality of first injection portions 46 indicated with solid lines correspond to an uppermost layer. A plurality of first branch tubes 44 and a plurality of first injection portions 46 indicated with dashed line correspond to a second uppermost layer. A plurality of first branch tubes 44 and a plurality of first injection portions 46 indicated with broken lines correspond to a third uppermost layer. A plurality of first branch tubes 44 and a plurality of first injection portions 46 indicated with dot-and-dash lines correspond to a lowermost layer. In the following explanation, in some cases, the uppermost layer is called a first layer, the second uppermost layer is called a second layer, a third uppermost layer is called a third layer, and a lowermost layer is called a fourth layer.

As shown in Fig. 5, the first branch tubes 44 in the first layer, the first branch tubes 44 in the second layer, the first branch tubes 44 in the third layer and the first branch tubes 44 in the fourth layer are arranged so as not to overlap with each other if seen from above. For example, the first branch tubes 44 in the first layer, the first branch tubes 44 in the second layer, the first branch tubes 44 in the third layer and the first branch tubes 44 in the fourth layer are arranged being shifted by 18 degrees relative to each other about the central axis of the first trunk tube 42. With an arrangement like this, the space density of a process liquid injected in the inner space of the absorption cylinder 11 can be made uniform.

Also, as shown in Fig. 5, the first branch tubes 44 are, in radial directions from the first trunk tube 42, shorter than the first beams 86. In other words, the circumferential ends of the plurality of first branch tubes 44 are configured to be positioned at inner positions than the first linking portions 83. Also, the circumferential ends of the plurality of first branch tubes 44 are configured to be positioned at inner positions than the end portion of the first inlet tube 75. With a configuration like this, even if the liquid ejection tube 30 is rotated relative to the pull-up direction when withdrawing the liquid ejection tube 30 to the outside of a ship, the end portions of the first branch tubes 44 can be prevented from contacting the first linking portions 83.

Similarly, the second branch tubes 54 are, in radial directions from the second trunk tube 52, shorter than the first beams 86 arranged above them. In other words, the circumferential ends of the plurality of second branch tubes 54 are configured to be positioned at inner positions than the first linking portions 83. Also, the circumferential ends of the plurality of second branch tubes 54 are configured to be positioned at inner positions than the end portion of the second inlet tube 78. With a configuration like this, even if the liquid ejection tube 30 is rotated relative to the pull-up direction when withdrawing the liquid ejection tube 30 to the outside of a ship, the end portions of the second branch tubes 54 can be prevented from contacting the first linking portions 83.

Similarly, the third branch tubes 64 are, in radial directions from the third trunk tube 62, shorter than the first beams 86, the second beams 87 and the third beams 88 arranged above them. In other words, the circumferential ends of the plurality of third branch tubes 64 are configured to be positioned at inner positions than the first linking portions 83, the second linking portions 84 and the third linking portions 85. With a configuration like this, even if the liquid ejection tube 30 is rotated relative to the pull-up direction when withdrawing the liquid ejection tube 30 to the outside of a ship, the end portions of the third branch tubes 64 can be prevented from contacting the first linking portions 83, the second linking portions 84 and the third linking portions 85.

The first beams 86 are provided with hook-lock portions 90 near the positions at which they are connected to the first linking portions 83. The hook-lock portions 90 receive external forces for withdrawing the liquid ejection tube 30 to the outside of a ship. The hook-lock portions 90 are eye bolts, for example.

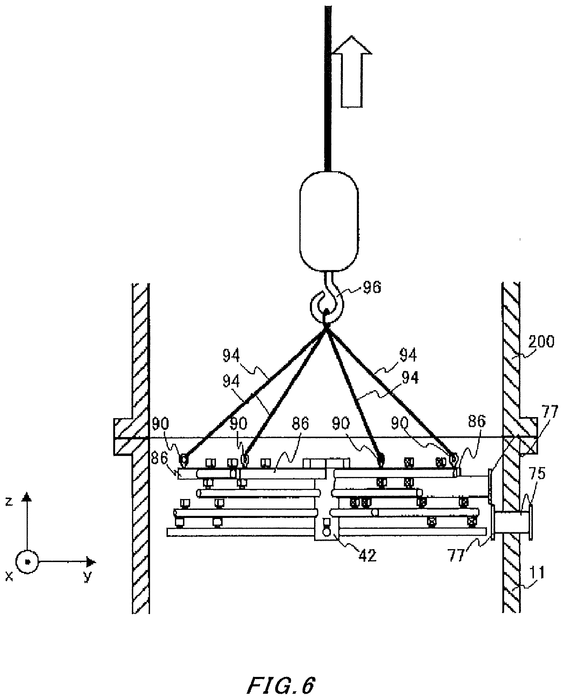

Fig. 6 shows the gist for explaining a liquid ejection tube 30 withdrawing method. Fig. 6 shows a state where the first unit 40 is withdrawn to the outside of a ship in maintenance of the liquid ejection tube 30.

In maintenance of the liquid ejection tube 30, an operator locks ends of the pulling wires 94 to the hook-lock portions 90. The operator hooks the other ends on the crane hook 96. In the present embodiment, four-point hanging is adopted in which the hook-lock portions 90 provided at the outer ends of the first beams 86 that are arranged in a cross pull up the pulling wires 94. For this reason, the load on the pulling wires 94 can be made even, and if the liquid ejection tube 30 is pulled up to the outside of a ship, the posture of the liquid ejection tube 30 can be stabilized.

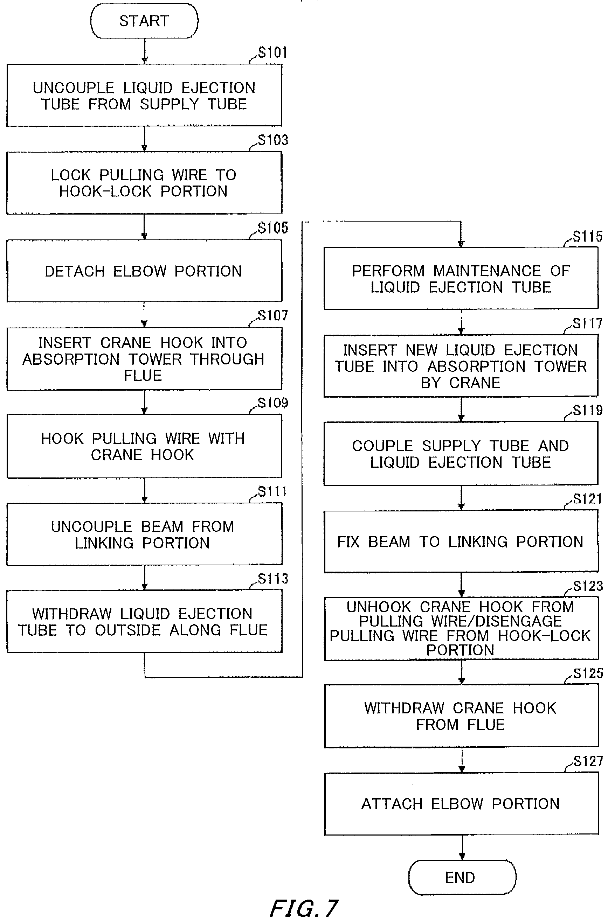

Fig. 7 is a flow diagram showing a procedure of performing maintenance of the exhaust gas processing apparatus according to the first embodiment. This flow is executed in a predetermined maintenance performance period. This flow is started after an operator stops introduction of an exhaust gas into the exhaust gas processing apparatus 1, and stops operation of the exhaust gas processing apparatus 1. Also, for example, a crane installed at a harbor is used for removal and insertion of the liquid ejection tube 30 or the like from and into the exhaust gas processing apparatus.

After stopping introduction of an exhaust gas into the exhaust gas processing apparatus 1 and stopping operation of the exhaust gas processing apparatus 1, an operator uncouples the liquid ejection tube 30 from a supply tube that supplies a process liquid (Step S101). More specifically, the operator enters the inside of the absorption tower 100 through the maintenance window 22 and the maintenance window 24, and disconnects the joints at the first joint portion 77, the second joint portion 80 and the third joint portion 82. Specifically, the operator disconnects the joints at the flanges by eliminating a sealing material applied onto the joint parts to unfasten fastening between bolts and nuts. Thereby, the respective joints between the first inlet tube 75 and the first coupling tube 76, the second inlet tube 78 and the second coupling tube 79, and the third inlet tube 81 and the third trunk tube 62 are disconnected.

Next, the operator locks the pulling wires 94 to the hook-lock portions 90 (Step S103). Next, the operator detaches the elbow portion 300 from the exhaust gas exit cylinder 200 (Step S105).

Next, the operator inserts the crane hook 96 into the absorption tower 100 from an upper end opening of the exhaust gas exit cylinder 200 (Step S107). Next, the operator hooks the pulling wires 94 with the crane hook 96 (Step S 109). Next, the operator uncouples beams from linking portions (Step S111). Specifically, the operator uncouples the first linking portions 83 from the first beams 86 by unfastening the fastening using bolts and nuts between first linking portions 83 and first beams 86, or cutting a welded portion by a grinder or the like. Similarly, the operator uncouples the connection between second linking portions 84 and second beams 87 and the connection between third linking portions 85 and third beams 88.

Next, the operator withdraws the liquid ejection tube 30 to the outside along the exhaust gas exit cylinder 200 by a crane installed at a harbor (Step S 113). In the present embodiment, along with the liquid ejection tube 30, the first coupling tube 76, the second coupling tube 79, the first beams 86, the second beams 87 and the third beams 88 are withdrawn to the outside. At this time, conduits are withdrawn to the outside with injection portions attached thereto.

Next, the operator performs maintenance of the liquid ejection tube 30 (Step S115). Specific contents of maintenance include replacement of units determined necessary to be replaced, replacement of injection portions and cleaning processes. Furthermore, the entire liquid ejection tube 30 may be replaced.

Next, the operator inserts the liquid ejection tube 30 having undergone maintenance or a new liquid ejection tube 30 to the absorption tower 100 from an upper end opening of the exhaust gas exit cylinder 200 by a crane (Step S117). Next, the operator couples the liquid ejection tube 30 with a supply tube that supplies a process liquid (Step S 119). Specifically, the operator joins the first joint portion 77, the second joint portion 80 and the third joint portion 82.

Next, the operator connects beams to linking portions (Step S121). Specifically, the operator fastens the first linking portions 83 and the first beams 86 with bolts and nuts, or connects them by welding. Next, the operator connects the second linking portions 84 and the second beams 87 by welding. Last, the operator connects the third linking portions 85 and the third beams 88 by welding.

Next, the operator unhooks the crane hook 96 from the pulling wires 94 to disengage the pulling wires from the hook-lock portions 90 (Step S123). Next, the operator withdraws the crane hook 96 to the outside through the exhaust gas exit cylinder 200 (Step S125). Last, the operator attaches the elbow portion 300 to the exhaust gas exit cylinder 200 (Step S127). Completion of steps up to Step S127 completes maintenance of the exhaust gas processing apparatus 1.

As described above, the exhaust gas processing apparatus 1 according to the present embodiment allows selection of units to be withdrawn depending on the degree of degradation of each unit. For example, if only the first unit 40 is to be withdrawn, in the present maintenance flow, a step of uncoupling the first coupling portion 72 between the first unit 40 and the second unit 50 may be provided between Step S109 and Step S111. Furthermore, a step of coupling the first coupling portion 72 may be provided between Step S 119 and Step S121. Also, if only the first unit 40 is to be detached, the operator may perform a process of uncoupling only the first joint portion 77 and the first beams 86 at Step S101 and Step S111. Furthermore, the operator may perform a process of connecting only the first joint portion 77 and the first beams 86 at Step S119 and Step S121.

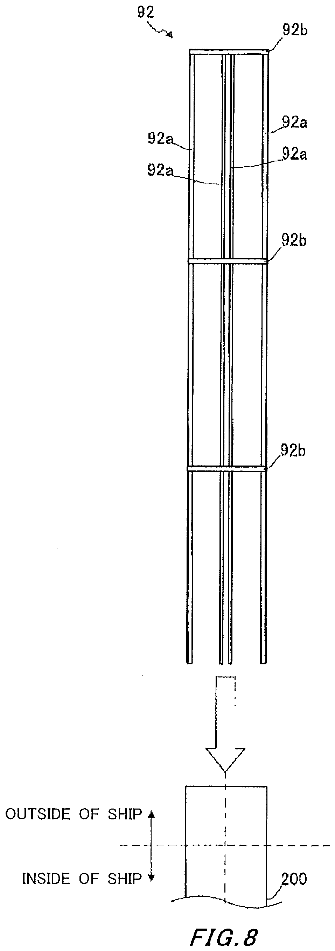

Fig. 8 is a schematic view for explaining another embodiment of maintenance of an exhaust gas processing apparatus. Particularly, the present figure is a schematic view for explaining attachment of a guide unit at the time of maintenance. In the present embodiment, a guide unit 92 is installed so as to prevent the liquid ejection tube 30 from rotating relative to a pull-up direction during maintenance. Common elements are given the same reference numbers, and the same explanation is not repeated.

In the present embodiment, the guide unit 92 is installed prior to the step of withdrawing the liquid ejection tube 30 to the outside of a ship. The guide unit 92 is configured with a plurality of guide members 92a and a plurality of fixation members 92b. The guide members 92a are plate-like members, and have lengths that extend from an upper end of the exhaust gas exit cylinder 200 to a lower end of the third beam fixing portion 68 supporting the third unit 60. The fixation members 92b are ring-shaped members, and fix the plurality of guide members 92a so that they are arranged along the circumferences when viewed from above. The fixation members 92b are provided at approximately equal intervals from an upper end of the guide members 92a.

As indicated with an outlined arrow in Fig. 8, the guide unit 92 is inserted into the absorption cylinder 11 along an inner wall thereof from an upper end opening of the exhaust gas exit cylinder 200. An arrangement of the guide members 92a inside the absorption cylinder 11 is explained in detail using the next figure.

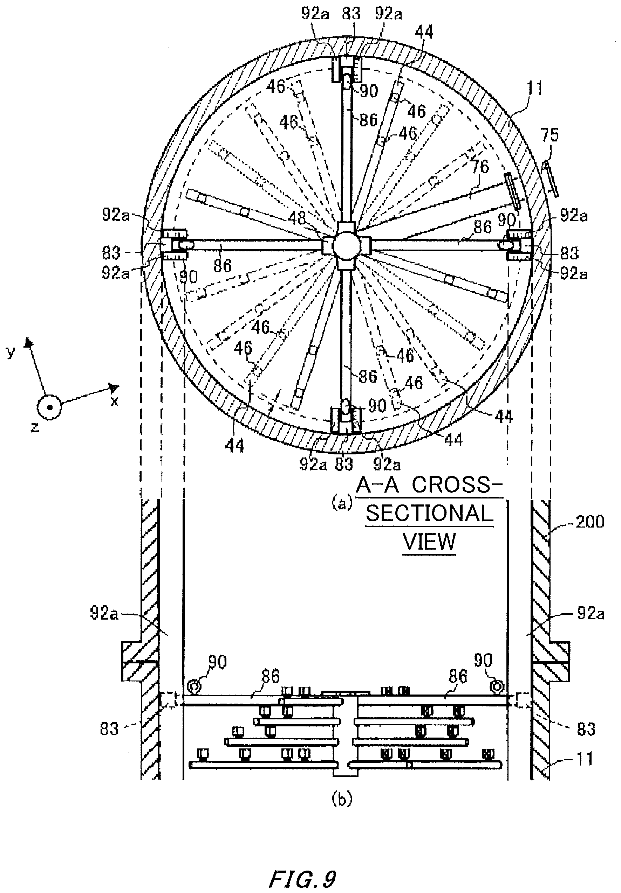

Fig. 9 is a schematic view for explaining an arrangement of the guide members 92a of the guide unit 92. (a) in Fig. 9 shows a section A-A in Fig. 3 in which the guide unit 92 has been inserted. (b) in Fig. 9 shows a front view of the exhaust gas processing apparatus 1 in a state where the guide unit 92 has been inserted. (b) in Fig. 9 selectively shows only portions that are necessary for explanation of an arrangement of the guide members 92a. Common elements are given the same reference numbers, and the same explanation is not repeated.

A pair of the guide members 92a are arranged so as the sandwich a first linking portion 83 and a first beam 86 in the inner circumference direction of the absorption cylinder 11. Also, the guide members 92a have a width that covers part of a first beam 86 from an inner wall of the absorption cylinder 11. For this reason, revolution, about the central axes of the absorption cylinder 11 and the exhaust gas exit cylinder 200, of the liquid ejection tube 30 is limited by the guide members 92a.

Similarly, the guide members 92a control revolution about the central axes of the absorption cylinder 11 and the exhaust gas exit cylinder 200 at the second beams 87 and the third beams 88 connected respectively to the second unit 50 and the third unit 60 arranged below the first unit 40. Accordingly, revolution, about the central axes of the absorption cylinder 11 and the exhaust gas exit cylinder 200, of the liquid ejection tube 30 as a whole is suppressed. By being guided by the guide members 92a, the liquid ejection tube 30 never rotates relative to the pull-up direction, but is withdrawn to the outside of a ship along inner walls of the absorption cylinder 11 and the exhaust gas exit cylinder 200. For this reason, contacts between the branch tubes, beams, first coupling tube 76, and second coupling tube 79, and a plurality of linking portions provided to inner walls of the first inlet tube 75, second inlet tube 78 and absorption cylinder 11 can be prevented.

If the guide unit 92 is installed, in the maintenance flow explained using Fig. 7, a step of installing the guide unit 92 may be provided between Step S105 and Step S107. Also, a step of detaching the guide unit 92 may be provided between Step S125 and Step S127.

About the guide unit 92 explained using Fig. 9, an explanation has been made by using an example in which a pair of guide members 92a are arranged so as to sandwich a first linking portion 83 and a first beam 86. However, the arrangement of a pair of guide members 92a is not limited to the present example. For example, a pair of guide members 92a may be arranged so as to sandwich the first inlet tube 75 and the first joint portion 77.

Prior to the step of withdrawing the liquid ejection tube 30 to the outside of a ship, buffer members may be attached to end portions of the first beams 86, the second beams 87 and the third beams 88. The buffer members are a buffer material containing urethane. However, the buffer members are not limited to a buffer material containing urethane, but any buffer material that containing various members that can provide buffering effects may be applied. For example, buffer materials containing rubber may be applied. By attaching buffer members, damages to inner walls of the absorption cylinder 11 and the exhaust gas exit cylinder 200 can be prevented if end portions of the first beams 86, the second beams 87 and the third beams 88 contact them when withdrawing the liquid ejection tube 30 to the outside of a ship. In the maintenance flow explained using Fig. 7, a step of attaching the buffer members to end portions of the above-mentioned beams may be provided between Step S111 and Step S 113. Also, if buffer members are attached to end portions of the beams of the replaced liquid ejection tube 30, a step of detaching the buffer members may be provided between Step S119 and Step S121.

In the explanation above, an explanation has been made by using one example of an exhaust gas processing apparatus having an approximately concentric cylindrical shape as a whole. However the exhaust gas processing apparatus does not necessarily have an approximately concentric cylindrical shape as a whole. For example, the exhaust gas exit cylinder 200 may have a shape having a portion that is curved to a certain degree as long as it allows drawing of the liquid ejection tube 30 along an inner wall of the exhaust gas exit cylinder 200.

In the explanation above, an embodiment in which the guide unit 92 for withdrawing the liquid ejection tube 30 along the absorption cylinder 11 and the exhaust gas exit cylinder 200 in maintenance of the exhaust gas processing apparatus 1 is attached has been explained. However, a guide portion may be provided in advance at inner walls of the absorption cylinder 11 and the exhaust gas exit cylinder 200. With a configuration like this, for example, if the exhaust gas exit cylinder 200 is curved, the liquid ejection tube 30 can be easily drawn out along the inner wall of the exhaust gas exit cylinder 200. Also, because a step of inserting the guide unit 92 and a step of withdrawing the guide unit 92 are not required, the maintenance steps can be simplified.

In the explanation above, the liquid ejection tube 30 that can be divided into three units has been explained as one example. However the number of units is not limited to three. The number of units may be two or four or larger. Also, the number of branch tubes in each unit, and the number of injection portions disposed in respective branch tubes are not limited to the embodiment explained above. For example, the number of branch tubes in one unit may be two or smaller or four or larger. Also, the number of injection portions arranged in one branch tube may be one or three or larger.

In the explanation above, an explanation has been made by using an example in which a plurality of beams are provided in order to support, with an inner wall of the absorption cylinder 11, the weight of each unit of the liquid ejection tube 30. However a beam needs not to be provided to each unit. For example, the third trunk tube 62 is configured to be supported by the third inlet tube 81. The second trunk tube 52 is configured to be directly supported by the third trunk tube 62, and the first trunk tube 42 is configured to be directly supported by the second trunk tube 52. Alternatively, the liquid ejection tube 30 may be configured integrally rather than with units. With such a configuration, the step of cutting connection of beams can be omitted, and so the maintenance steps can be simplified.

While the embodiments of the present invention have been described, the technical scope of the present invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the present invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### [Explanation of Reference Symbols]

1: exhaust gas processing apparatus; 10: inlet cylinder; 11: absorption cylinder; 12: exhaust gas inlet portion; 16: first liquid inlet portion; 17: second liquid inlet portion; 18: third liquid inlet portion; 20: drainage outlet portion; 22: maintenance window; 24: maintenance window; 26: baffle; 30: liquid ejection tube; 40: first unit; 42: first trunk tube; 44: first branch tube; 46: first injection portion; 48: first beam fixing portion; 50: second unit; 52: second trunk tube; 54: second branch tube; 56: second injection portion; 58: second beam fixing portion; 60: third unit; 62: third trunk tube; 64: third branch tube; 66: third injection portion; 68: third beam fixing portion; 72: first coupling portion; 74: second coupling portion; 75: first inlet tube; 76: first coupling tube; 77: first joint portion; 78: second inlet tube; 79: second coupling tube; 80: second joint portion; 81: third inlet tube; 82: third joint portion; 83: first linking portion; 84: second linking portion; 85: third linking portion; 86: first beam; 87: second beam; 88: third beam; 90: hook-lock portion; 92: guide unit; 94: pulling wire; 96: crane hook; 100: absorption tower; 200: exhaust gas exit cylinder; 300: elbow portion.

## Claims

1. An exhaust gas processing apparatus comprising:
an absorption cylinder that absorbs a target substance in an exhaust gas by causing the exhaust gas to contact a liquid;
an injection portion that injects the liquid into an inner space of the absorption cylinder through which the exhaust gas passes;
a conduit: to which the injection portion is attached; that guides the liquid to the injection portion; and that is arranged inside the absorption cylinder; and
a supply tube that supplies the liquid to the conduit, wherein
the conduit has an uncoupling portion that allows uncoupling from the supply tube so that the conduit can be withdrawn to an outside along a flue that guides, to outside air, the exhaust gas that has passed through the absorption cylinder in a state where the injection portion remains attached.

2. The exhaust gas processing apparatus according to Claim 1, wherein a plurality of units formed by combinations of the injection portion and the conduit are arranged inside the absorption cylinder.

3. The exhaust gas processing apparatus according to Claim 2, wherein sizes of the plurality of units decrease as distances between them and the flue decrease.

4. The exhaust gas processing apparatus according to Claim 2 or 3, wherein a number of units among the plurality of units to which the liquid is supplied from the supply tube varies depending on an emission amount of the exhaust gas.

5. The exhaust gas processing apparatus according to any one of Claims 2 to 4, duration during which the liquid is being supplied to the plurality of units increases as distances between them and the flue decrease.

6. The exhaust gas processing apparatus according to any one of Claims 2 to 5, wherein each unit among the plurality of units is separably coupled with each other.

7. The exhaust gas processing apparatus according to Claim 6, wherein the supply tube and the uncoupling portion are provided to each unit among the plurality of units.

8. The exhaust gas processing apparatus according to any one of Claims 1 to 7, wherein the absorption cylinder has a maintenance window near the uncoupling portion.

9. The exhaust gas processing apparatus according to any one of Claims 1 to 8, comprising:
a linking portion provided to an inner wall of the absorption cylinder; and
a beam that connects the linking portion and the conduit, wherein
connection of the beam with the linking portion is disconnected, and the beam is withdrawn to an outside integrally with the conduit.

10. The exhaust gas processing apparatus according to Claim 9, wherein a hook-lock portion that receives an external force for withdrawing the conduit to an outside is provided to the beam.

11. The exhaust gas processing apparatus according to Claim 9 or 10, wherein
the conduit has a branch tube to which the injection portion is attached, and a trunk tube to which a plurality of the branch tubes are connected, and
a plurality of the beams are provided radially from the trunk tube.

12. The exhaust gas processing apparatus according to Claim 11, wherein a length of the beam in a radial direction from the trunk tube is longer than a length of the branch tube.

13. The exhaust gas processing apparatus according to any one of Claims 1 to 12, comprising a guide portion for moving the conduit along the flue.

14. The exhaust gas processing apparatus according to any one of Claims 9 to 12, comprising a guide portion for moving the conduit along the flue, wherein
the guide portion has a pair of guide members arranged to sandwich the beam in an inner circumference direction of the absorption cylinder.

15. The exhaust gas processing apparatus according to any one of Claims 1 to 14, comprising an exhaust cylinder that forms the flue, wherein
the exhaust cylinder and the absorption cylinder form coaxial cylindrical shapes.

16. An exhaust gas processing apparatus maintenance method for an exhaust gas processing apparatus having:
an absorption cylinder that absorbs a target substance in an exhaust gas by causing the exhaust gas to contact a liquid;
an injection portion that injects the liquid into an inner space of the absorption cylinder through which the exhaust gas passes;
a conduit: to which the injection portion is attached; that guides the liquid to the injection portion; and that is arranged inside the absorption cylinder; and
a supply tube that supplies the liquid to the conduit,
the exhaust gas processing apparatus maintenance method comprising:
uncoupling the conduit from the supply tube; and
withdrawing the conduit to an outside along a flue that guides, to outside air, the exhaust gas that has passed through the absorption cylinder in a state where the injection portion remains attached.

17. The exhaust gas processing apparatus maintenance method according to Claim 16, comprising disconnecting a beam extending out from the conduit and a linking portion provided to an inner wall of the absorption cylinder.

18. The exhaust gas processing apparatus maintenance method according to Claim 17, comprising mounting a protection member at a tip of the beam.

19. The exhaust gas processing apparatus maintenance method according to any one of Claims 16 to 18, comprising uncoupling coupling between a plurality of units formed by combinations of the injection portion and the conduit that are arranged inside the absorption cylinder.

20. The exhaust gas processing apparatus maintenance method according to any one of Claims 16 to 19, comprising inserting a guide member so as to allow movement of the conduit along the flue.
